(19) Europäisches Patentamt
European Patent Office
Office européen des brevets

(11) **EP 1 480 021 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
**G01F 23/296** (2006.01)   **G01F 25/00** (2006.01)

(21) Anmeldenummer: **04011742.6**

(22) Anmeldetag: **18.05.2004**

(54) **Verfahren zur Füllstandsmessung**

Method for fluid level measurement

Procédé de mesure du niveau d'un fluide

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.05.2003 DE 10323063**

(43) Veröffentlichungstag der Anmeldung:
**24.11.2004 Patentblatt 2004/48**

(73) Patentinhaber: **ENDRESS + HAUSER GMBH + CO.**
**79689 Maulburg (DE)**

(72) Erfinder:
• **Eckert, Manfred**
**79674 Todtnau (DE)**
• **Spanke, Dietmar, Dr.**
**79585 Steinen (DE)**
• **Maier, Stefan**
**79618 Rheinfelden (DE)**
• **Steltner, Holger, Dr.**
**79110 Freiburg (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 0 661 527   EP-A2- 0 296 583**
**WO-A-01/84086   DE-C1- 4 233 257**
**US-A- 5 877 997   US-A- 6 044 703**

**Beschreibung**

Die Erfindung betrifft ein Verfahren zur Füllstandsmessung nach dem Laufzeitprinzip mit einem Füllstandsmeßgerät mit einem Ultraschallsensor zum Senden und Empfangen von Ultraschall.

Mit deratigen Füllstandsmeßgeräten lassen sich unter anderem Füllstände eines Füllgutes z.B. in einem Behälter oder in einem offenen Gerinne messen. Dabei wird ein vom Ultraschallsensor ausgesendetes Signal, z.B. ein kurzer Ultraschallwellenpuls, in Richtung des Füllgutes gesendet und an der Oberfläche des Füllgutes reflektiert. Die Laufzeit des Pulses vom Sensor zur Oberfläche und zurück wird ermittelt und daraus der Füllstand bzw. die Füllhöhe bestimmt.

Derartige Meßgeräte werden in vielen Industriezweigen, z.B. in der Lebensmittelindustrie, der Wasser- und Abwasserbranche und in der Chemie, eingesetzt.

Um eine möglichst hohe Sendeleistung des Ultraschallsensors zu erzielen wird dieser vorzugsweise mit dessen Resonanzfrequenz angeregt. Die Resonanzfrequenz wird dabei in der Regel vorab bestimmt und der Ultraschallsensor nachfolgend mit dieser Resosnanzfrequenz angeregt. Die Resonanzfrequenz ist jedoch keine Konstante. Sie kann hängt zum Beispiel von einer Temperatur einer Umgebung des Ultraschallsensors ab. Hinzu kommt, daß sich bei industriellen Anwendungen mit der Zeit Medien, deren Füllstand gemessen werden soll, an dem Ultraschallsensor ablagern können. Eine solche Ansatzbildung stellt eine bei Schwingungen des Ultraschallsensors mitbewegte Masse dar und kann somit ebenfalls zu einer Veränderung der Resonanzfrequenz führen.

Bei herkömmlichen Füllstandsmeßgeräten wird daher häufig vorab die Resonanzfrequenz des Ultraschallsensors bei verschiedenen Temperaturen ausgemessen und im Gerät abgespeichert. Das Füllstandsmeßgerät wird mit einem Temperatursensor ausgestattet, der dazu dient eine aktuelle Temperatur des Ultraschallsensors zu erfassen. Anhand der aktuellen Temperatur wird aus den abgespeicherten Resonanzfrequenzen die der aktuellen Temperatur zugeordnete Resonanzfrequenz ausgewählt und der Ultraschallsensor im Sendebetrieb mit dieser Frequenz angeregt. Dies bedeutete einen zusätzlichen Aufwand.

Eine eventuelle Veränderung durch Ansatzbildung wird hierdurch nicht erfaßt.

In einigen Anwendungen kann, z.B. durch eine Überfüllung eines Behälters, der Fall eintreten, daß der Ultraschallsensor in das Medium eintaucht.

In der DE-C 197 14 973 ist ein Verfahren zur Füllstandsmessung beschrieben, bei dem anhand eines Nachschwingverhaltens des Ultraschallsensors im Anschluß an einen Sendevorgang festgestellt wird, ob der Ultraschallsensor mit Füllgut bedeckt ist.

WO01/84086-A1 beschreibt einen Nahfeld-Messsensor. Der Sensor weist einen Ultraschallwandler auf. Der Wandler ist mit einem Controller wie beispielsweise einem programmierbaren Mikroprozessor gekoppelt. Die Steuerung erzeugt ein erstes Befehlssignal für den Wandler, erfasst ein erstes Echosignal vom Wandler und bestimmt, ob der Wandler das erste Echosignals innerhalb eines Nahfeld-Zeitfensters empfing. Wenn das erste Echosignal innerhalb des Nahfeld-Zeitfensters empfangen wurde, erfasst die Steuereinheit ein zweites Echosignal. Wenn ein zweites Echosignal nicht innerhalb einer vorbestimmten Zeitspanne erfasst wurde, ignoriert der Controller das erste Echosignal und erzeugt ein zweites Befehlssignal. Der Controller setzt entweder das erste Echosignal oder die Differenz zwischen dem ersten Echosignal und dem zweiten Echosignal um in eine "Entfernung zu dem Ziel"-Angabe oder in eine volumetrische Darstellung des Materials in dem Behälter. Vorzugsweise wird der Wandler im Impulsbetrieb in Resonanz betrieben, wobei die Temperaturabhängigkeit des Frequenzgangs des Wandlers berücksichtigt wird.

Ist der Ultraschallsensor mit dem Füllgut bedeckt, so ist bei herkömmlichen Füllstandsmeßverfahren in der Regel keine Füllstandsmessung mehr möglich.

Es ist eine Aufgabe der Erfindung ein Verfahren zur Füllstandsmessung anzugeben, das langfristig zuverlässig arbeitet.

Hierzu besteht die Erfindung in einem Verfahren zur Füllstandsmessung gemäß Anspruch 1 nach dem Laufzeitprinzip mit einem Füllstandsmeßgerät mit einem Ultraschallsensor zum Senden und Empfangen von Ultraschall, bei dem

-   eine wiederkehrende Überprüfung einer Resonanzfrequenz des Ultraschallsensors vorgenommen wird, bei der

   -- der Ultraschallsensor kurzzeitig zu Schwingungen angeregt wird,
   -- im Anschluß an die Anregung ein Empfangssignal des Ultraschallsensors aufgenommen wird, und
   -- anhand des Empfangssignals die aktuelle Resonanzfrequenz des Ultraschallsensors bestimmt wird, indem

      --- das Empfangssignal digitalisiert und einem digitalen Signalprozessor zugeführt wird,
      --- im Signalprozessor eine Fouriertransformation des digitalisierten Empfangssignals durchgeführt wird,
      --- ein Maxmimum des fouriertransformierten Empfangssignals als Funktion der Frequenz bestimmt wird,
      --- eine Frequenz, bei der das Maximum auftritt als aktuelle Resonanzfrequenz abgespeichert wird, und

- der Ultraschallsensor im Messbetrieb durch den digitalen Signalprozessor mit der zuletzt bestimmten aktuellen Resonanzfrequenz angeregt wird.

Gemäß einer Ausgestaltung des Verfahrens

- wird bei der Überprüfung eine Temperatur des Ultraschallsensors gemessen,
- es wird eine Differenz zwischen der aktuellen Resonanzfrequenz und einem temperaturabhängigen Sollwert der Resonanzfrequenz bestimmt, und
- es wird, wenn die Differenz größer als ein vorgegebener Mindestwert ist, eine Warnung abgegeben.

Gemäß einer weiteren Ausgestaltung des Verfahrens

- wird eine Differenz zwischen der aktuellen Resonanzfrequenz und einem vorgegebenen Referenzwert bestimmt, und
- es wird ein Alarm ausgelöst wenn die Differenz einen vorgegebenen Maximalwert überschreitet.

Gemäß einer Weiterbildung des Verfahrens

- wird bei der Überprüfung eine Temperatur des Ultraschallsensors gemessen,
- es wird eine Differenz zwischen der aktuellen Resonanzfrequenz und einem temperaturabhängigen Sollwert der Resonanzfrequenz bestimmt, und
- wenn die Differenz größer als ein vorgegebener Schwellwert ist, wird eine Selbstreinigung des Ultraschallsensors ausgelöst.

Gemäß einer Ausgestaltung des letztgenannten Verfahrens wird der Ultraschallsensor bei der Selbstreinigung zu energiereichen Schwingungen angeregt.
Gemäß einer weiteren Ausgestaltung des Verfahrens werden die aktuellen Resonanzfrequenzen in einem Speicher abgelegt, und anhand der zeitlichen Veränderungen der Resonanzfrequenz des Ultraschallsensors wird eine Bewertung des Ultraschallsensors vorgenommen.
Gemäß einer Weiterbildung des Verfahrens wird anhand der aktuellen Resonanzfrequenz festgestellt, ob der Ultraschallsensor von einem Füllgut bedeckt ist.
Gemäß einer Weiterbildung der letztgenannten Weiterbildung bestimmt das Füllstandsmeßgerät den Füllstand anhand einer Laufzeit eines Signals, das vom Ultraschallsensor gesendet, an einem Boden eines Behälters, in dem sich das Füllgut befindet, reflektiert, danach an der Oberfläche des Füllguts reflektiert, anschließend erneut am Boden reflektiert und wieder vom Ultraschallsensor empfangen wurde, wenn der Ultraschallsensor vom Füllgut bedeckt ist.
Gemäß einer anderen Weiterbildung bestimmt das Füllstandsmeßgerät, wenn der Ultraschallsensor vom Füllgut bedeckt ist, eine Dicke einer am Boden des Behälters befindlichen Ablagerung, indem eine Laufzeit eines Signal vom Ultraschallsensor zur Ablagerung und zurück bestimmt wird.
Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1     zeigt eine Anordnung zur Füllstandsmessung;

Fig. 2     zeigt eine Amplitude eines Empfangssignals im Anschluß an eine Anregung als Funktion der Zeit;

Fig. 3     zeigt einen logarithmierten Betrag einer Fouriertransformierten des Empfangssignals von Fig. 2 als Funktion der Frequenz;

Fig. 4     zeigt Wege, die ein Ultraschallsignal zurücklegt, wenn der Ultraschallsensor in das Füllgut eingetaucht ist; und

Fig. 5     zeigt die Amplitude eines Empfangssignals als Funktion der Zeit, bei vom Füllgut bedecktem Ultraschallsensor.

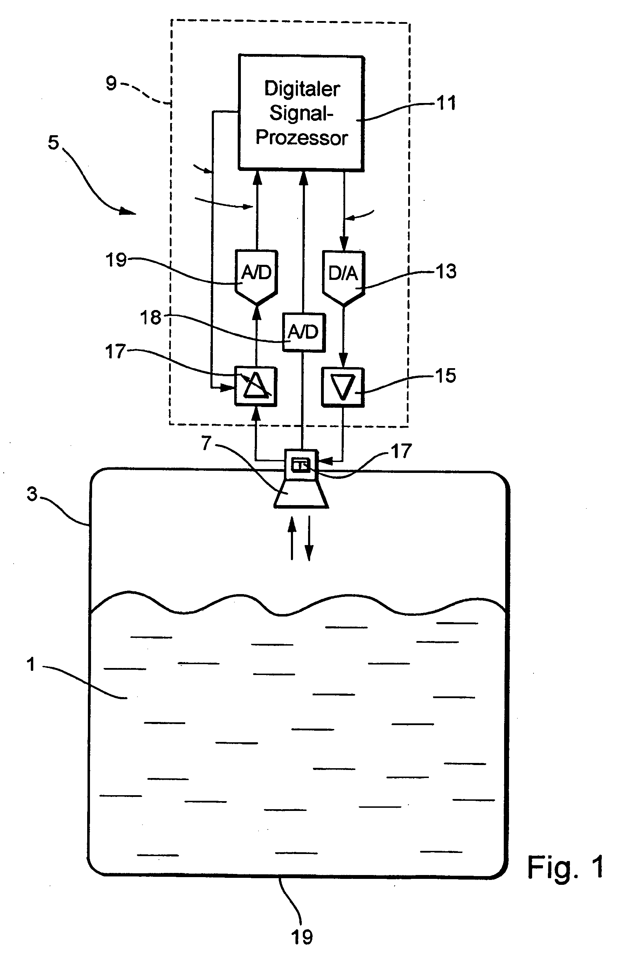

Fig. 1 zeigt eine Anordnung zur Füllstandsmessung. Es ist ein mit einem Füllgut 1 gefüllter Behälter 3 dargestellt, auf dem ein nach dem Laufzeitprinzip arbeitendes Füllstandsmeßgerät 5 mit einem Ultraschallsensor 7 angeordnet ist.
Als Ultraschallsensor 7 eignet sich z.B. ein topfförmiges Gehäuse, das von einem Boden abgeschlossen ist. Das Gehäuse besteht aus einem Kunststoff, z.B. aus Polypropylen. In dem Gehäuse ist ein piezoelektrisches Element angeordnet, das zum Senden und Empfangen von Ultraschallsignalen durch den Boden hindurch dient.
Da sich die akustische Impedanz des Mediums, in das der Ultraschall auszusenden ist, z.B. Luft, und die des piezoelektrischen Elements sehr stark unterscheiden, ist zwischen dem piezoelektrischen Element und dem Boden des Gehäuses vorzugsweise eine Anpaßschicht aus einem Kunststoff mit mittlerer akustischer Impedanz angeordnet. Als Kunststoff ist z.B. ein Epoxidharz geeignet.

Um eine möglichst gute Anpassung und damit einen möglichst hohen Schalldruck zu erzielen weist die Anpaßschicht vorzugsweise eine Dicke auf, die einem Viertel der Wellenlänge der erzeugten Schall- oder Ultraschallwellen entspricht.

Bei einem Ultraschallsensor, der nicht nur als Sender, sondern auch als Empfänger genutzt wird, ist es wichtig, daß eine einmal angeregte Sendeschwingung schnell abklingt. Erst nach einem vollständigen Abklingen der Sendeschwingung ist der Ultraschallsensor empfangsbereit. Um ein schnelles Abklingen der Sendeschwingung zu erzielen, ist in dem Gehäuse daher vorzugsweise ein Dämpfungsmaterial vorgesehen. Das Dämpfungsmaterial ist z.B. ein Verguß, beispielsweise ein Silikongel, der das Gehäuse ausfüllt.

Das Füllstandsmeßgerät 5 weist eine Sende- und Empfangsschaltung 9 auf, die dazu dient, den Ultraschallsensor 7 zum Senden von Ultraschallsignalen anzuregen und vom Ultraschallsensor 7 empfangene Ultraschallsignale aufzunehmen und einer weiteren Verarbeitung und/oder Auswertung zuzuführen.

Kernstück der Sende- und Empfangsschaltung 9 ist in dem dargestellten Ausführungsbeispiel ein digitaler Signalprozessor 11. Der digitale Signalprozessor 11 ist über einen Digital-Analog-Wandler 13 und einen Verstärker 15 mit dem Ultraschallsensor 7 verbunden. Der digitale Signalprozessor 11 kann digitale Signale erzeugen, die über den Digital-Analog-Wandler 13 in analoge Signale umgewandelt und vom Verstärker 15 verstärkt in analoger Form am Utraschallsensor 7 anliegen. Die analogen Signale werden z.B. einer auf dem piezoelektrischen Element aufgebrachten Elektrode zugeführt. Das piezoelektrische Element wird durch die anliegenden Signale in Schwingungen versetzt und sendet dieser Anregung entsprechende Ultraschallsignale durch den Boden in Richtung des Füllguts.

Die ausgesendeten Ultraschallsignale werden an der Füllgutoberfläche reflektiert und deren Echosignale vom Ultraschallsensor 7 empfangen. Hierbei wird das piezoelektrische Element in Schwingungen versetzt, die in Form von elektrischen Wechselsignalen an der Elektrode als Empfangssignale abnehmbar sind. Die Empfangssignale werden von einem Verstärker 17 verstärkt und einem Analog-Digital-Wandler 19 zugeführt, der die eingehenden Signale digitalisiert und dem digitalen Signalprozessor 11 zuführt.

Werden Ultraschallsignale, wie sie heute in der Ultraschallmeßtechnik üblicherweise eingesetzt werden, im Bereich von 1 kHz bis 200 kHz gesendet und/oder empfangen, so können handelsübliche Analog-Digital-Wandler und Digital-Analog-Wandler mit Abtastraten von etwa 1 MHz eingesetzt werden. Heute sind digitale Signalprozessoren mit Taktraten von einigen Gigahertz im Handel erhältlich, die ausreichend schnell arbeiten, um nicht nur die Signale zur Anregung des Ultraschallsensors 7 bereitstellen zu können, sondern auch das Schwingungsverhalten des Ultraschallsensors 7 unmittelbar aufzeichnen und verarbeiten zu können.

Zur Füllstandsmessung wird beispielsweise auf die zuvor beschriebene Weise ein kurzer Ultraschallwellenpuls generiert, der vom Ultraschallsensor 7 in Richtung des Füllgutes gesendet wird. Es wird nach einer füllstandsabhängigen Laufzeit dessen Echosignal empfangen und mittels des digitalen Signalprozessors 11 ausgewertet.

Um eine möglichst hohe Sendeleistung und damit natürlich auch eine hohe Leistung der Empfangssignale zu erzielen, erfolgt die Anregung vorzugsweise mit der Resonanzfrequenz des Ultraschallsensors 7.

Die Resonanzfrequenz des Ultraschallsensors 7 ist jedoch keine konstante Größe, sondern verändert sich mit der Temperatur und anderen äußeren Einflüssen.

Erfindungsgemäß wird daher eine wiederkehrende Überprüfung der Resonanzfrequenz des Ultraschallsensors 7 vorgenommen. Dabei wird der Ultraschallsensor 7 kurzzeitig zu Schwingungen angeregt. Im Anschluß an die Anregung wird ein Empfangssignal des Ultraschallsensors aufgenommen, anhand dessen die aktuelle Resonanzfrequenz des Ultraschallsensors 7 bestimmt wird.

Ultraschallsensoren sind schwingungsfähige gedämpfte Systeme, deren Schwingungseigenschaften im Wesentlichen durch deren Güte Q und eine Eigenfrequenz $f_0$ des entsprechenden ungedämpften Systems bestimmt sind.

Versetzt man den Ultraschallsensor 7, bzw. genauer das piezoelektrische Element in Schwingungen mit einem Signal S der Form

$$S = A_s \cos(2\pi f\, t)$$

worin

A_s    die Amplitude der Anregung,
f      die Frequenz der Anregung, und
t      die Zeit bedeuten,

so führt der Ultraschallsensor nach einem Einschwingvorgang eine erzwungene Schwingung der Form

$$x(t) = A(A_s, f, f_0, Q) \cos(2\pi f t - \alpha(f, f_0, Q)) \text{ aus,}$$

worin

$A(A_s, f, f_0, Q)$ die von der Amplitude $A_s$ der Anregung, der Frequenz f der Anregung, der Eigenfrequenz $f_0$, und der Güte Q des Systems abhängige Amplitude der erzwungenen Schwingung, und

$\alpha(f, f_0, Q)$ die von der Frequenz f der Anregung, der Eigenfrequenz $f_0$, und der Güte Q des Systems abhängige Phase bedeuten.

Die Amplitude $A(A_s, f, f_0, Q)$ der erzwungenen Schwingung ist maximal, wenn mit der Resonanzfrequenz $f_{res}$ angeregt ist, die sich gemäß der nachfolgenden Gleichung aus der Eigenfrequenz $f_0$ und der Güte Q bestimmt:

$$f_{res} = f_0 (1 - 1/2Q^2)^{1/2}$$

Stellt man zu einem Zeitpunkt $t_0$ die Anregung ab, so schwingt das gedämpfte System gemäß nachfolgender Formel aus:

$$x_d(t) = e^{-(t-t0)/\tau} A(A_s, f, f_0, Q) \cos(2\pi f_d(t-t_0) - \alpha_d)$$

worin

$\tau = Q/(\pi f_0)$ die Abklingzeit,
$f_d = f_0 (1 - 1/4Q^2)^{1/2}$ die Frequenz, und
$\alpha_d$ eine von Anfangsbedingungen abhängige Phase bedeuten.

Die Frequenz $f_d$ des Nachschwingens ist nahezu gleich der Resonanzfrequenz $f_{res}$ des Ultraschallsensors 7. Es gilt:

$$f_{res}/f_d = [1 - 1/(4Q^2 - 1)]^{1/2}$$

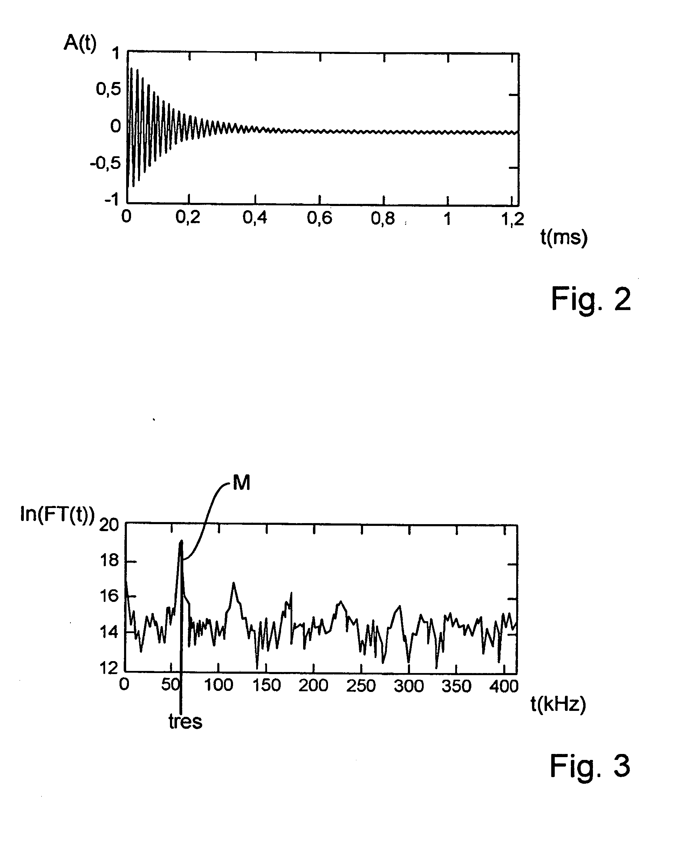

Die Güte Q von handelsüblichen zur Füllstandsmessung eingesetzten Ultraschallsensoren 7 ist üblicherweise größer gleich zwanzig. Bei einer Güte $Q \geq 20$ gilt:
$1 \geq f_{res}/f_d \geq 0,9997$.
Dieser geringe Unterschied ist für das hier beschriebene Verfahren unerheblich. Die Frequenz des Nachschwingens $f_d$ entspricht hier der Resonanzfrequenz $f_{res}$.
Anhand des Schwingungsverhaltens des Ultraschallsensors 7 im Anschluß an eine kurzzeitige Anregung läßt sich folglich dessen aktuelle Resonanzfrequenz bestimmen.
Zur Bestimmung der aktuellen Resonanzfrequenz wird der Ultraschallsensor 7 mit einer beliebigen Frequenz f und einer beliebigen Amplitude As kurzzeitig zu Schwingungen angeregt und ein Empfangssignal des Ultraschallsensors 7 im Anschluß an diese Anregung aufgezeichnet. Fig. 2 zeigt ein Beipiel für eine Amplitude A(t) des Empfangssignals im Anschluß an die Anregung über die Zeit t. Das Empfangssignal wird verstärkt und digitalisiert und dem digitalen Signalprozessor 11 zugeführt. Im digitalen Signalprozessor 11 wird eine Fouriertransformation des verstärkten digitalisierten Empfangssignals vorgenommen. In Fig. 3 ist ein logarithmierter Betrag $\ln(|FT(A)[f]|)$ des fouriertransformierten Empfangssignals FT(A) über die Frequenz f aufgetragen. Der Betrag zeigt ein deutliches Maximum M. Die zugehörige Frequenz $f_{res}$ entspricht der aktuellen Resonanzfrequenz des Ultraschallsensors 7. Die aktuelle Resonanzfrequenz läßt sich somit auf einfache Weise durch eine Bestimmung des absoluten Maximums M des fouriertransformierten Empfangssignals bestimmen.
Es wird die Frequenz, bei der das Maximum auftritt, mittels des digitalen Signalprozessors 11 bestimmt und als aktuelle Resonanzfrequenz abgespeichert.

Im nachfolgenden Messbetrieb wird der Ultraschallsensor 7 durch den digitalen Signalprozessor 11 mit der zuletzt bestimmten aktuellen Resonanzfrequenz angeregt. Bei dem beschriebenen Füllstandsmeßgerät 5 erfolgt die Anregung mit der Resonanzfrequenz z.B. durch entsprechende Software, die digitale Signale mit der aktuellen Resonanzfrequenz generiert. Entsprechende Programme sind beispielsweise in einem in Fig. 1 nicht dargestellten Speicher des Füllstandsmeßgeräts 5 abgelegt. Mittels dieser Programme erzeugt der digitale Signalprozessor 11 digitale Signale mit der Resonanzfrequenz, die dann über den Digital-Analog-Wandler 13 und den Verstärker 15 dem Ultraschallsensor 7 zuführbar sind.

Senden, Empfangen und Überprüfung der Resonanzfrequenz werden im wesentlichen durch den digitalen Signalprozessor 11 ausgeführt. Es sind insb. keine aufwendigen analogen Schaltungen, insb. keine Regelkreise zur Einstellung der Resonanzfrequenz erforderlich.

Durch die wiederkehrende Überprüfung der Resonanzfrequenz wird gewährleistet, daß der Ultraschallsensor 7 auch dann mit seiner Resonanzfrequenz angeregt wird, wenn sich diese über lange Zeiträume hinweg, z.B. durch Ansatz oder Änderungen der Umgebungstemperatur, verändert. Hierfür sind weder zusätzliche Bauteile noch gesonderte Sensoren, z.B. Temperatursensoren, erforderlich.

Durch die wiederkehrende Überprüfung der Resonanzfrequenz und die Nachführung der Sendefrequenz ist sicher gestellt, daß der Ultraschallsensor 7 im Meßbetrieb immer mit einer maximalen Sendeleistung sendet. Eine hohe Sendeleistung bietet den Vorteil, daß die Echosignale hochenergetischer Sendesignale ebenfalls eine hohe Signalamplitude aufweisen. Hierdurch verbessert sich die Genauigkeit, mit der eine Laufzeit dieser Signale zur Füllgutoberfläche und zurück bestimmt werden kann. Maxima der Echosignale, die auf eine Reflektion an der Füllgutoberfläche zurückgehen und damit auch eine zugehörige Laufzeit können genauer und eindeutiger bestimmt werden, da sich bei hohen Sendeleistungen die Signale deutlich von einem Untergrundrauschen abheben. Beim Empfang ist eine Empfindlichkeit des Ultraschallsensors 7 für solche Signale am größten, deren Frequenz der aktuellen Resonanzfrequenz entspricht.

Die wiederkehrende Überprüfung der Resonanzfrequenz kann beispielsweise in regelmäßigen zeitlichen Abständen, z.B. nach einer vorgegebenen Anzahl von Meßzyklen, oder vor jeder Messung erfolgen.

Wird zusätzlich zur wiederkehrenden Überprüfung der Resonanzfrequenz eine Temperatur des Ultraschallsensors 7 gemessen, so lassen sich hieraus wichtige Informationen über den Zustand des Ultraschallsensors 7 ableiten. Hierzu ist vorzugsweise im Ultraschallsensor 7 ein Temperatursensor 17 integriert. Ein Meßsignal des Temperatursensors 17 wird vorzugsweise mittels eines Analog-Digital-Wandlers 18 digitalisiert und dem digitalen Signalprozessor 11 zugeführt.

Anhand der Temperatur des Ultraschallsensors 7 und der durch die Überprüfung ermittelten aktuellen Resonanzfrequenz läßt sich beispielsweise feststellen, ob sich am Ultraschallsensor 7 Ansatz abgelagert hat.

Die Resonanzfrequenz des Ultraschallsensors 7 ist temperaturabhängig. Bei einer bestimmten Temperatur weist die Resonanzfrequenz des ansatzfreien Ultraschallsensors 7 einen temperaturabhängigen Sollwert auf. Eine entsprechende Kennlinie oder deren parametrische Form, die die Abhängigkeit der Resonanzfrequenz des ansatzfreien Ultraschallsensors 7 von der Temperatur wiedergibt, wird vorzugsweise vorab aufgezeichnet und in einem Speicher des Füllstandsmeßgeräts 5 abgelegt.

Es werden die aktuelle Resonanzfrequenz bestimmt und die Temperatur gemessen. Anhand der Temperatur ermittelt der digitale Signalprozessor 11 den zugehörigen temperaturabhängigen Sollwert der Resonanzfrequenz aus der Kennlinie. Nachfolgend wird eine Differenz zwischen der aktuellen Resonanzfrequenz und dem temperaturabhängigen Sollwert der Resonanzfrequenz bestimmt.

Ist die Differenz größer als ein vorgegebener Mindestwert, so haben sich die Schwingungseigenschaften des Ultraschallsensors 7 verändert. Der Mindestwert entspricht vorzugsweise einer Abweichung, die z.B. durch Toleranzen und Meßungenauigkeiten bedingt sein kann.

Ist die Differenz größer als der vorgegebene Mindestwert wird vorzugsweise eine Warnung abgegeben. Die Warnung kann je nach Anwendung unterschiedlich ausgestaltet sein. Sie kann z.B. mittels einer am Füllstandsmeßgerät 5 vorgesehenen Leuchtdiode angezeigt, in Form eines elektrischen Signals ausgegeben, oder mittels digitaler Kommunikation übertragen werden.

Ist die Differenz größer als der vorgegebene Maximalwert wird vorzugsweise ein Alarm abgegeben. Als Maximalwert wird vorzugsweise ein Wert vorgegeben, bei dem davon auszugehen ist, daß aufgrund der starken Veränderung der Schwingungseigenschaften keine sinnvolle Füllstandsmessung mehr möglich ist. Der Alarm kann genau wie die Warnung z.B. mittels einer am Füllstandsmeßgerät 5 vorgesehenen Leuchtdiode angezeigt, in Form eines elektrischen Signals ausgegeben, oder mittels digitaler Kommunikation übertragen werden.

Vorzugsweise wird eine Selbstreinigung des Ultraschallsensors 7 ausgelöst, wenn die Differenz einen vorgegebenen Schwellwert überschreitet. Der vorgegebene Schwellwert ist größer gleich dem Mindestwert. Der Wert, den man dem Schwellwert zuweisen wird, hängt davon ab, in welchen Bereichen das Füllstandsmeßgerät 5 eingesetzt werden soll. Je nach Anwendung kann es günstiger sein, durch einen niedrigen Schwellwert eine häufige Reinigung auszulösen, bei der jegliche Ansatzbildung nach kurzer Zeit bereits wieder entfernt wird, oder durch einen hohen Schwellwert seltener eine Reinigung auszulösen und dadurch über vergleichsweise lange Zeiträume ohne Unterbrechung Füllstandsmessungen durchführen zu können.

Die Selbstreinigung des Ultraschallsensors 7 erfolgt vorzugsweise, indem der Ultraschallsensor 7 zu energiereichen Schwingungen angeregt wird. Durch energiereiche Schwingungen wird der Ansatz abgeschüttelt.

Die Selbstreinigung kann in dem beschriebenen Ausführungsbeispiel durch den digitale Signalprozessor 11 sowohl ausgelöst als auch durch Abgabe entsprechender digitaler Signale durchgeführt werden.

Vorzugsweise werden die bei den Überpüfungen ermittelten aktuellen Resonanzfrequenzen in einem Speicher abgelegt und es wird anhand einer zeitlichen Veränderungen der Resonanzfrequenz des Ultraschallsensors eine Bewertung des Ultraschallsensors vorgenommen. Die Bewertung kann dabei sehr vielgestaltig ausgebildet sein.

So kann beispielsweise eine über einen langen Zeitraum unveränderte Resonanzfrequenz dahingehend bewertet werden, daß der Ultraschallsensor 7 einwandfrei funktioniert. Diese Bewertung kann beispielsweise genutzt werden, um an sich unnötige Wartungen oder Reinigungen des Utraschallsensors 7 zu vermeiden.

Weiter kann beispielsweise ein stetiger Abfall der Resonanzfrequenz mit der Zeit dahingehend bewertet werden, daß sich eine mit der Zeit anwachsende Schicht von Ansatz an dem Ultraschallsensor 7 ablagert. Anhand der Geschwindigkeit, mit der sich die Resonanzfrequenz ändert, kann abgeschätzt werden, wann eine Reinigung des Ultraschallsensors 7 erforderlich sein wird.

Ebenso können anhand der abgespeicherten Resonanzfrequenzen kurzfristige drastische, z.B. sprunghafte, Veränderungen der Resonanzfrequenz erkannt werden. Dabei reicht es in der Regel sogar aus, lediglich den aktuellen und den vorherigen Wert der Resonanzfrequenz abzuspeichern.

Eine sprunghafte Veränderung der Resonanzfrequenz tritt z.B. ein, wenn der Ultraschallsensor 7 plötzlich mechanisch beschädigt wird.

Zusätzlich kann die Überprüfung der Resonanzfrequenz dazu genutzt werden, anhand der aktuellen Resonanzfrequenz festzustellen, ob der Ultraschallsensor 7 vom Füllgut 1 bedeckt ist. Hierbei wird die Tatsache ausgenutzt, daß sich die Resonanzfrequenz eines vom Füllgut 1 bedeckten Ultraschallsensors 7 deutlich von der Resonanzfrequenz des gleichen Ultraschallsensors 7 in Luft oder einem Gas unterscheidet. Ist das Füllgut 1 bekannt, kann zusätzlich der Wert der Resonanzfrequenz des Ultraschallsensors 7 in diesem Medium vorab ermittelt, und in einem Speicher des Füllstandsmeßgeräts 5 abgelegt werden. Ist das Füllgut 1 unbekannt, können vorab Frequenzintervalle für die Resonanzfrequenz des mit Füllgut 1 bedeckten Ultraschallsensors 7 festgelegt werden, innerhalb derer die Resonanzfrequenz des Ultraschallsensors 7 zu erwarten ist, wenn der Ultraschallsensor 7 in das Füllgut 1 eintaucht. Durch einen einfachen Vergleich der aktuellen Resonanzfrequenz mit den oben genannten bei Bedeckung zu erwartenden Frequenzen wird festgestellt, ob der Ultraschallsensor 7 eingetaucht ist.

Ist der Ultraschallsensor 7 in das Füllgut 1 eingetaucht, so kann anhand des nachfolgend beschriebenen Verfahrens der Füllstand auch bei eingetauchtem Ultraschallsensor 7 bestimmt werden.

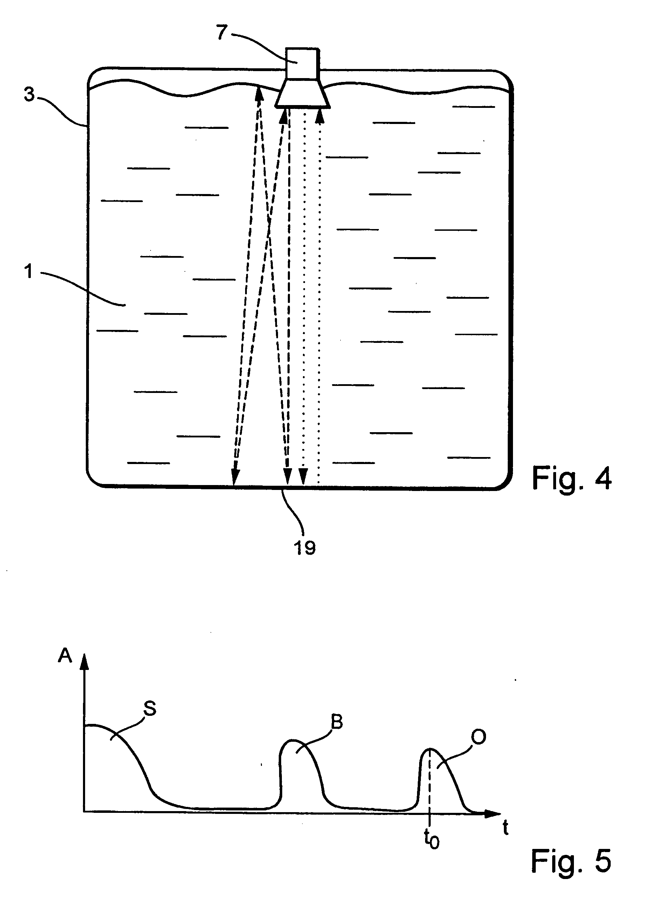

Hierzu wird bei Bedeckung eine Laufzeit eines Signals bestimmt, das vom Ultraschallsensor 7 gesendet, an einem Boden 19 des Behälters 3, in dem sich das Füllgut 1 befindet reflektiert, danach an der Oberfläche des Füllguts 1 reflektiert, anschließend erneut am Boden 19 reflektiert und wieder vom Ultraschallsensor 7 empfangen wurde. Der Weg, den dieses Signal zurück legt, ist in Fig. 4 durch gestrichelt eingezeichnete Pfeile veranschaulicht.

Fig. 5 zeigt die Amplitude eines Empfangssignal eines in das Füllgut 1 eingetauchten Ultraschallsensors 7 als Funktion der Zeit. Die Amplitude weist drei Maxima S, B und O auf. Das erste Maximum S ist auf das Senden eines kurzen Ultraschallsignals zurückzuführen. Das zweite Maximum B wird durch einen Anteil des gesendeten Ultraschallsignals erzeugt, der an dem Boden 19 direkt zurück zum Ultraschallsensor 7 reflektiert wird. Ein zugehöriger Signalweg ist in Fig. 4 als gepunktete Linie eingezeichnet. Das dritte Maximum O ist auf einen Anteil des gesendeten Ultraschallsignals zurückzuführen, der den in Fig. 4 als gestrichelte Linie eingezeichneten Weg zurückgelegt hat. Bei der Füllstandsmessung wird zunächst das Maximum O und die zugehörige Laufzeit $t_o$ bestimmt.

Anhand der Laufzeit $t_o$, der Ausbreitungsgeschwindigkeit v des Ultraschallsignals im Füllgut 1 und einem Abstand UB zwischen dem Ultraschallsensor 7 und dem Boden 19 bestimmt sich der Füllstand L gemäß der Beziehung:

$$L = \tfrac{1}{2}\, v\, t - UB$$

Alternativ kann bei bedecktem Ultraschallsensor 7 eine Dicke d einer am Boden 19 des Behälters 3 befindlichen Ablagerung bestimmt werden.

Hierzu wird ein Ultraschallsignal in Richtung des Bodens 19 ausgesendet und dessen Echo aufgezeichnet. Das Ultraschallsignal wird an der Oberfläche der Ablagerung zurück zum Ultraschallsensor 7 reflektiert. Das Empfangssignal weist also ein Maximum auf, dessen Laufzeit $t_A$ proportional zum zweifachen der Wegstrecke vom Ultraschallsensor 7 zur Oberfläche der Ablagerung ist. Der Proportionalitätsfaktor ist gleich dem Kehrwert der Ausbreitungsgeschwindigkeit des Ultraschallsignals im Füllgut 1.

Zur Bestimmung der Dicke d der am Boden 19 des Behälters 3 befindlichen Ablagerung wird also die Laufzeit

$t_A$ bestimmt.

Aus der Laufzeit die Laufzeit $t_A$ bestimmt sich die Dicke d der Ablagerung gemäß der Beziehung:

$$d = UB - \tfrac{1}{2} v \, t_A$$

worin

d     die Dicke,
UB    der Abstand zwischen dem Ultraschallsensor und dem Boden,
v     die Ausbreitungsgeschwindigkeit des Ultraschallsignals in dem Füllgut, und
$t_A$    die Laufzeit des Ultraschallsignals vom Ultraschallsensor 7 zur Oberfläche der Ablagerung und zurück bedeuten.

**Patentansprüche**

1.  Verfahren zur Füllstandsmessung nach dem Laufzeitprinzip mit einem Füllstandsmeßgerät (5) mit einem Ultraschallsensor (7) zum Senden und Empfangen von Ultraschall, bei dem

    - eine wiederkehrende Überprüfung einer Resonanzfrequenz des Ultraschallsensors (7) vorgenommen wird, bei der

        - - der Ultraschallsensor (7) kurzzeitig zu Schwingungen angeregt wird,
        - - im Anschluß an die Anregung ein Empfangssignal des Ultraschallsensors (7) aufgenommen wird, und
        - - anhand des Empfangssignals die aktuelle Resonanzfrequenz des Ultraschallsensors (7) bestimmt wird, indem

            - -- das Empfangssignal digitalisiert und einem digitalen Signalprozessor (11) zugeführt wird,
            - -- im Signalprozessor eine Fouriertransformation des digitalisierten Empfangssignals durchgeführt wird,
            - -- ein Maxmimum des fouriertransformierten Empfangssignals als Funktion der Frequenz bestimmt wird,
            - -- eine Frequenz, bei der das Maximum auftritt als aktuelle Resonanzfrequenz abgespeichert wird,

    - der Ultraschallsensor (7) im Messbetrieb durch den digitalen Signalprozessor (11) mit der zuletzt bestimmten aktuellen Resonanzfrequenz angeregt wird, und
    - bei der Überprüfung eine Temperatur des Ultraschallsensors (7) gemessen wird,
    - eine Differenz zwischen der aktuellen Resonanzfrequenz und einem temperaturabhängigen Sollwert der Resonanzfrequenz bestimmt wird.

2.  Verfahren nach Anspruch 1, bei dem

    - bei der Überprüfung eine Temperatur des Ultraschallsensors (7) gemessen wird,
    - eine Differenz zwischen der aktuellen Resonanzfrequenz und einem temperaturabhängigen Sollwert der Resonanzfrequenz bestimmt wird, und
    - wenn die Differenz größer als ein vorgegebener Mindestwert ist, eine Warnung abgegeben wird.

3.  Verfahren nach Anspruch 1, bei dem

    - eine Differenz zwischen der aktuellen Resonanzfrequenz und einem vorgegebenen Referenzwert bestimmt wird, und
    - wenn die Differenz einen vorgegebenen Maximalwert überschreitet ein Alarm ausgelöst wird.

4.  Verfahren nach Anspruch 1, bei dem

    - bei der Überprüfung eine Temperatur des Ultraschallsensors (7) gemessen wird,

- eine Differenz zwischen der aktuellen Resonanzfrequenz und einem temperaturabhängigen Sollwert der Resonanzfrequenz bestimmt wird, und
- wenn die Differenz größer als ein vorgegebener Schwellwert ist, eine Selbstreinigung des Ultraschallsensors (7) ausgelöst wird.

5. Verfahren nach Anspruch 4, bei dem der Ultraschallsensor (7) bei der Selbstreinigung zu energiereichen Schwingungen angeregt wird.

6. Verfahren nach Anspruch 4 oder 5, bei dem
die temperaturabhängigen Sollwerte der Resonanzfrequenz in einer entsprechenden Kennlinie oder deren parametrische Form, die die Abhängigkeit der Resonanzfrequenz des ansatzfreien Ultraschallsensors (7) von der Temperatur wiedergibt, vorab aufgezeichnet und in einem Speicher des Füllstandsmeßgeräts (5) abgelegt werden.

7. Verfahren nach Anspruch 1, bei dem

- die aktuellen Resonanzfrequenzen in einem Speicher abgelegt werden, und
- anhand der zeitlichen Veränderungen der Resonanzfrequenz des Ultraschallsensors (7) eine Bewertung des Ultraschallsensors (7) vorgenommen wird.

8. Verfahren nach Anspruch 1, bei dem

- anhand der aktuellen Resonanzfrequenz festgestellt wird, ob der Ultraschallsensor (7) von einem Füllgut (1) bedeckt ist.

9. Verfahren nach Anspruch 8, bei dem das Füllstandsmeßgerät (5), wenn der Ultraschallsensor (7) vom Füllgut (1) bedeckt ist, den Füllstand anhand einer Laufzeit ($t_o$) eines Signals bestimmt, das vom Ultraschallsensor (7) gesendet, an einem Boden (19) eines Behälters (1), in dem sich das Füllgut (1) befindet reflektiert, danach an der Oberfläche des Füllguts (1) reflektiert, anschließend erneut am Boden (19) reflektierk und wieder vom Ultraschallsensor (19) empfangen wurde.

10. Verfahren nach Anspruch 8, bei dem das Füllstandsmeßgerät (5), wenn der Ultraschallsensor (7) vom Füllgut (1) bedeckt ist, eine Dicke (d) einer am Boden (19) des Behälters (3) befindlichen Ablagerung bestimmt, indem eine Laufzeit eines Signal vom Ultraschallsensor (5) zur Ablagerung und zurück bestimmt wird.

**Claims**

1. Procedure to measure the level according to the time-of-flight principle with a level transmitter (5) with an ultrasonic sensor (7) designed to send and receive the ultrasound, wherein

- a resonance frequency of the ultrasonic sensor (7) is checked repeatedly, wherein

- - the ultrasonic sensor (7) is briefly excited to vibrate,
- - following the excitation, a reception signal of the ultrasonic sensor (7) is recorded and
- - on the basis of the reception signal the current resonance frequency of the ultrasonic sensor (7) is determined, in that

- -- the reception signal is digitized and supplied to a digital signal processor (11),
- -- in the signal processor a Fourier transform of the digitized reception signal is performed,
- -- a maximum of the reception signal that underwent the Fourier transform is determined as a function of the frequency,
- -- a frequency at which the maximum occurs is saved as the current resonance frequency,

- the ultrasonic sensor (7) is excited during measuring operation by the digital signal processor (11) with the current resonance frequency last determined, and
- during the check a temperature of the ultrasonic sensor (7) is measured,
- a difference is determined between the current resonance frequency and a temperature-dependent target value of the resonance frequency.

2. Procedure as claimed in Claim 1, wherein

   - during the check a temperature of the ultrasonic sensor (7) is measured,
   - a difference is determined between the current resonance frequency and a temperature-dependent target value of the resonance frequency, and
   - if the difference is greater than a prespecified minimum value, a warning is output.

3. Procedure as claimed in Claim 1, wherein

   - a difference is determined between the current resonance frequency and a prespecified reference value, and
   - if the difference exceeds a prespecified maximum value, an alarm is triggered.

4. Procedure as claimed in Claim 1, wherein

   - during the check a temperature of the ultrasonic sensor (7) is measured,
   - a difference is determined between the current resonance frequency and a temperature-dependent target value of the resonance frequency, and
   - if the difference exceeds a prespecified threshold, this triggers self-cleaning of the ultrasonic sensor (7).

5. Procedure as claimed in Claim 4, wherein
   the ultrasonic sensor (7) is excited to high-energy vibrations during the self-cleaning process.

6. Procedure as claimed in Claim 4 or 5, wherein
   the temperature-dependent target values of the resonance frequency are recorded first of all in a corresponding characteristic curve or in parametric form, which reflects the dependency of the resonance frequency of the ultrasonic sensor, which is free of deposits, on the temperature and stored in a memory of the level transmitter (5).

7. Procedure as claimed in Claim 1, wherein

   - the current resonance frequencies are stored in a memory, and
   - the ultrasonic sensor (7) is evaluated based on the changes over time of the resonance frequency of the ultrasonic sensor (7).

8. Procedure as claimed in Claim 1, wherein

   - on the basis of the current resonance frequency it is determined whether the ultrasonic sensor (7) is covered by product (1).

9. Procedure as claimed in Claim 8, wherein when the ultrasonic sensor (7) is covered by product (1) the level transmitter (5) determines the level using the time-of-flight (to) of a signal which is sent by the ultrasonic sensor (7), reflected at a floor (19) of a container (3) containing the product (1), then reflected at the surface of the product (1), then reflected again at the floor (19) and then received again by the ultrasonic sensor (7).

10. Procedure as claimed in Claim 8, wherein when the ultrasonic sensor (7) is covered by product (1) the level transmitter (5) determines a thickness (d) of a deposit on the floor (19) of the container (3) by determining a time-of-flight of a signal from the ultrasonic sensor (5) to the deposit and back.


**Revendications**

1. Procédé destiné à la mesure de niveau d'après le principe du temps de propagation avec un transmetteur de niveau (5) avec un capteur ultrasonore (7) destiné à l'émission et à la réception d'ultrasons, pour lequel

   - est effectué un contrôle récurrent d'une fréquence de résonance du capteur ultrasonore (7), pour lequel

     - - le capteur ultrasonore (7) est excité momentanément en vibrations,
     - - consécutivement à l'excitation, un signal de réception du capteur ultrasonore (7) est enregistré, et
     - - au moyen du signal de réception, la fréquence de résonance actuelle du capteur ultrasonore (7) est déterminée, en ce

- -- que le signal de réception est numérisé et acheminé à un processeur de signal numérique (11),
- -- que dans le processeur de signal est réalisée une transformation de Fourier du signal de réception numérisé,
- -- qu'un maximum du signal de réception soumis à une transformation de Fourier est déterminé en tant que fonction de la fréquence,
- -- qu'une fréquence, à laquelle le maximum apparaît, est enregistrée en tant que fréquence de résonance actuelle,

- le capteur ultrasonore (7) est excité en mode mesure avec la dernière fréquence de résonance actuelle déterminée, par l'intermédiaire du processeur de signal numérique (11), et
- lors du contrôle, une température du capteur ultrasonore (7) est mesurée,
- une différence est déterminée entre la fréquence de résonance actuelle et une valeur de consigne de la fréquence de résonance dépendant de la température.

2. Procédé selon la revendication 1, pour lequel

- lors du contrôle est mesurée une température du capteur ultrasonore (7),
- une différence est déterminée entre la fréquence de résonance actuelle et une valeur de consigne de la fréquence de résonance dépendant de la température, et
- lorsque la différence est supérieure à une valeur minimale prédéfinie, un avertissement est délivré.

3. Procédé selon la revendication 1, pour lequel

- une différence est déterminée entre la fréquence de résonance actuelle et une valeur de référence prédéfinie, et
- lorsque la différence dépasse une valeur maximale prédéfinie, une alarme est déclenchée.

4. Procédé selon la revendication 1, pour lequel

- lors du contrôle est mesurée une température du capteur ultrasonore (7),
- une différence est déterminée entre la fréquence de résonance actuelle et une valeur de consigne de la fréquence de résonance dépendant de la température, et
- lorsque la différence est supérieure à une valeur seuil prédéfinie, un autonettoyage du capteur ultrasonore (7) est déclenché.

5. Procédé selon la revendication 4, pour lequel
le capteur ultrasonore (7) est excité, lors de l'autonettoyage, en vibrations à grande énergie.

6. Procédé selon la revendication 4 ou 5, pour lequel
les valeurs de consigne dépendant de la température de la fréquence de résonance sont enregistrées au préalable dans une courbe caractéristique correspondante ou sous leur forme paramétrique, qui reflète la dépendance de la fréquence de résonance du capteur ultrasonore (7) exempt de dépôt par rapport à la température, et mémorisées dans une mémoire du transmetteur de niveau (5).

7. Procédé selon la revendication 1, pour lequel

- les fréquences de résonance actuelles sont mémorisées dans une mémoire, et
- une évaluation du capteur ultrasonore (7) est réalisée sur la base des modifications temporelles de la fréquence de résonance du capteur ultrasonore (7).

8. Procédé selon la revendication 1, pour lequel

- on détermine, au moyen de la fréquence de résonance actuelle, si le capteur ultrasonore (7) est recouvert par un produit (1).

9. Procédé selon la revendication 8, pour lequel
le transmetteur de niveau (5), lorsque le capteur ultrasonore (7) est recouvert par le produit (1), détermine le niveau au moyen d'un temps de propagation ($t_o$) d'un signal, lequel signal a été émis par le capteur ultrasonore (7), réfléchi sur un fond (19) d'un réservoir (3) dans lequel se trouve le produit (1), réfléchi ensuite sur la surface du produit (1), puis de nouveau sur le fond (19) et finalement reçu par le capteur ultrasonore (7).

**10.** Procédé selon la revendication 8, pour lequel
le transmetteur de niveau (5), lorsque le capteur ultrasonore (7) est recouvert par le produit (1), détermine une épaisseur (d) d'un dépôt se trouvant au fond (19) du réservoir (3), en ce qu'est déterminé un temps de propagation d'un signal issu du capteur ultrasonore (5) jusqu'au dépôt et de retour vers le capteur.

9

5

11 — Digitaler Signal-Prozessor

19 — A/D

D/A — 13

18 — A/D

17

15

7

17

3

1

19

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19714973 C

- WO 0184086 A1